# FASCICULE DE BREVET EUROPEEN

(11) **EP 0 417 004 B1**
(45) Date de publication et mention de la délivrance du brevet: **09.03.1994**
(21) Numéro de dépôt: 90402450.2
(22) Date de dépôt: 06.09.1990
(51) Int. Cl.: F17C 5/00, F25J 1/02

(54) **Procédé pour maintenir en deça d'une limite prédéterminée la pression au sein d'un stockage de produit en deux phases liquide et vapeur pendant le remplissage de celui-ci et installation de recondensation associée**
Verfahren, um den Druck beim Füllen einer zweiphasigen Produktlagerung unter einem vorbestimmten Limit zu halten und die dazugehörige Kondensiereinrichtung
Process for maintaining the pressure within a two-phase product storage under a pre-determined limit during the filling and associated condensation installation

(30) Priorité: 08.09.1989 FR 8911768
(43) Date de publication de la demande: 13.03.1991
(73) Titulaire: Société Française de Stockage Géologique "GEOSTOCK", F-92563 Rueil Malmaison Cédex (FR)
(72) Inventeur: Pivet, Loic, F-92100 Boulogne-Billancourt (FR); Pradat, Jean-Claude, F-78640 Neauphle-Le-Chateau (FR)
(74) Mandataire: Pinguet, André

(56) Documents cités:
- FR-A- 2 588 947
- GB-A- 740 231
- US-A- 2 764 873

## Description

La présente invention a trait à un procédé pour maintenir en deçà d'une limite prédéterminée la pression au sein d'un stockage de produit à tension de vapeur supérieure à 50 kilopascals à la température du stockage, et cela pendant le remplissage de ce dernier. Par produit ayant une telle tension de vapeur, il est entendu un produit susceptible d'exister sous forme d'une phase gazeuse du stockage surmontant une phase liquide pour peu que les conditions de température et de pression s'y prêtent. Un gaz liquéfié soit par l'effet de la pression, soit par celui de la température, soit par l'effet des deux conjugués, pourrait par exemple être un tel produit et, de façon encore plus précise, un gaz de pétrole liquéfié (G.P.L.). Le procédé s'applique quant à lui notamment lors du remplissage à grands débits de cavités souterraines de stockage en vue d'empêcher que la pression maximale admissible pour l'étanchéité des cavités ne soit dépassée tout en évitant que du produit ne soit perdu par exemple par purge automatique ou manuelle de la phase vapeur à l'air ou à la torche. L'invention concerne également une installation de recondensation permettant de mettre en oeuvre ce procédé.

Afin de stocker des produits du type précité acheminés par bateau, certaines installations portuaires comprennent des cavités souterraines de stockage qui peuvent accueillir des volumes de produits de l'ordre de la dizaine, voire de la centaine de milliers de mètres cubes. Sur un plan économique, il est généralement admis que le remplissage doit être le plus court possible, ce qui implique de forts débits d'injection dans chacune des cavités, de l'ordre de 2 000 m³/h ou davantage. Si aucune mesure particulière n'est alors prise, on risque de mettre en péril la sécurité de l'installation.

En effet, l'introduction d'une nouvelle quantité de produit liquide se solde par la remontée de l'interface séparant les phases liquide et vapeur dans la cavité. Il s'ensuit une diminution du volume offert à la phase vapeur qui voit donc sa pression augmenter. Or, la cavité, ses parois, son puits d'accès ou toute autre infrastructure sont conçus pour des pressions de service située entre une limite inférieure, mais aussi une limite supérieure. Il n'est donc pas question que la pression du produit dans la cavité dépasse cette limite de pression maximale admissible.

Afin d'éviter cela, on autorise le départ d'une partie de la phase vapeur. Selon les cas, ce prélèvement est effectué en continu ou à des intervalles de temps convenables pendant le remplissage. La vapeur recueillie est alors en tout ou partie reliquéfiée pour être réintroduite dans la cavité. De manière classique, on a recours dans ce but à un ensemble d'appareils comprenant au moins un compresseur et un condenseur.

Si cet ensemble d'appareils présente l'avantage d'être efficace en cas de surpression dans la phase vapeur au sein de la cavité que ce soit pendant son remplissage ou en dehors, c'est cependant un système coûteux et gros consommateur d'énergie eu égard aux débits de vapeur à reliquéfier. Il nécessite également une maintenance importante et présente donc tous les inconvénients des systèmes lourds et complexes.

Dans un domaine très voisin, le brevet US-2 764 873 s'attaque au problème de l'augmentation de la pression dans une réserve d'hydrocarbures de petite dimension telle que celle d'un camion-citerne lorsqu'on est en train de la remplir. Pour cela, il est fait appel à un éjecteur-condenseur afin d'aspirer, de condenser et de réintroduire dans la réserve la vapeur surmontant l'hydrocarbure liquide qui est par ailleurs amené au sein de la réserve au travers dudit éjecteur. Cependant, il s'agit là d'un éjecteur de petite taille qui ne saurait trouver son utilisation dans le cas de réserves d'hydrocarbures constituées par des cavités souterraines de dimensions importantes.

La présente invention a pour but de proposer une installation de recondensation plus économique et adaptée pour maintenir à un niveau acceptable la pression dans une cavité de grande dimension pendant son remplissage.

Cela est obtenu grâce à une installation de recondensation d'un stockage de dimensions importantes pour produit à tension de vapeur supérieure à 50 kilopascals à la température du stockage, maintenant en deçà d'une limite prédéterminée la pression au sein dudit stockage pendant son remplissage, ledit stockage contenant une phase liquide dudit produit surmontée par une phase vapeur dudit produit, ladite installation comprenant au moins :
- un éjecteur-condenseur se composant d'une tubulure avec un tube latéral d'axe de préférence vertical,
- une conduite de remplissage adaptée à faire communiquer au moins ladite tubulure avec ledit stockage,
- une conduite d'évacuation adaptée à faire communiquer ladite phase vapeur dudit stockage avec ledit tube latéral, et
- une conduite d'amenée adaptée à amener au moins une partie dudit produit liquide dans ladite tubulure, dans laquelle ladite tubulure dudit éjecteur-condenseur comprend au moins :
- un élément principal de section variable se composant, de l'amont à l'aval, d'un tronçon droit d'entrée éventuel, d'un convergent, d'un tronçon droit central et d'un tronçon divergent, et
- une buse de section également variable ayant un tronçon resserré en tronc de cône précédé ou non d'un tronçon droit d'entrée,

ladite buse étant assujettie au sein dudit élément principal de sorte que lesdits tronçons droits d'entrée, s'ils existent, de ladite buse et dudit élément principal s'épousent, ledit tronçon convergent dudit élément principal et ledit tronçon resserré de ladite buse étant engagés l'un dans l'autre tout en étant séparés de façon à définir entre eux une chambre annulaire dans laquelle débouche ledit tube latéral.

La présente installation s'applique bien entendu aux cavités de grandes dimensions, mais est indépendante du volume de la cavité, étant donné que les problèmes liés à l'introduction de liquide dans la cavité dépendent principalement du volume restant disponible pour la phase vapeur.

Avantageusement, ladite tubulure dudit éjecteur-condenseur se compose en outre d'un raccord adapté à être monté en amont dudit élément principal, l'extrémité libre dudit tronçon droit d'entrée de ladite buse comportant par ailleurs un rebord adapté à être coincé entre ledit raccord et ledit élément principal afin d'assujettir ladite buse.

Le cas échéant, ladite tubulure dudit éjecteur-condenseur est munie à ses deux extrémités de brides de raccordement.

La buse peut ne pas avoir de tronçon droit et n'être constituée que d'un tronçon resserré en tronc de cône qui se monte sur l'élément principal comme décrit ci-avant ou qui se raccorde par soudure à l'intérieur du tronçon droit d'entrée de l'élément principal. Dans ce dernier cas, le raccord en amont de l'élément principal n'existe pas.

Plus globalement, l'installation de recondensation peut prévoir qu'une vanne soit montée à chacune des deux extrémités de ladite tubulure dudit éjecteur-condenseur tandis qu'un bipasse muni d'une vanne relie directement ladite conduite d'amenée à ladite conduite de remplissage et qu'une dérivation relie ladite conduite d'évacuation audit tube latéral, ladite dérivation étant munie d'une vanne et d'un clapet de non retour tandis que ladite conduite d'évacuation comporte une vanne en aval de ladite dérivation.

Eventuellement, un système de régulation contrôle alors lesdites vannes de sorte que seulement une partie dudit produit liquide amené par ladite conduite d'amenée passe dans ladite tubulure dudit éjecteur-condenseur et/ou seulement une partie de ladite vapeur évacuée par ladite conduite d'évacuation est dérivée vers ledit tube latéral dudit éjecteur-condenseur avec asservissement éventuel du débit.

Lorsque ledit stockage comporte au moins une cavité souterraine communiquant avec la surface par au moins un puits d'exploitation obturé par des moyens d'obturation, ladite limite prédéterminée est la pression maximale admissible pouvant régner au sein de ladite cavité sans occasionner de défauts d'étanchéité de ladite cavité, dudit puits ou desdits moyens d'obturation. Avantageusement, ledit éjecteur-condenseur est disposé en surface dans un rayon d'environ 50 m ou plus autour dudit puits d'exploitation tandis que lesdites conduites de remplissage et d'évacuation passent dans ledit puits au travers desdits moyens d'obturation.

Lorsque le produit stocké en cavité est maintenu confiné par la pression de l'eau souterraine, la pression régnant en cavité doit rester inférieure à la pression hydrostatique et la température est pratiquement la température géothermique. Typiquement, pour du propane, la pression en cavité est de l'ordre de 8 bars et la température est d'environ 15°C. Ledit propane peut alors être amené avec un débit compris entre 500 et 3 000 m³/h et ladite tubulure dudit éjecteur-condenseur mesurer entre 1 et 10 m de long contre un diamètre intérieur variant de 100 à 5 cm à peu près.

Le produit stocké est soit un hydrocarbure pur ou en mélange, saturé ou non, liquéfié sous pression et/ou par la température soit tout autre gaz pur ou en mélange liquéfié de même manière (par la pression et/ou la température).

C'est ainsi que la présente invention aboutit à une installation de recondensation particulièrement légère puisque l'éjecteur-condenseur est capable à lui tout seul de participer à l'évacuation de la vapeur en l'aspirant, de condenser la vapeur évacuée et de la réintroduire au sein du stockage. Cet appareil fonctionne en outre par les simples propriétés de sa géométrie en liaison avec le débit de produit liquide amené en entrée. Il n'est donc pas besoin de fournir par ailleurs de l'énergie pour entraîner des pièces tournantes ou mettre des fluides en circulation par exemple. De même, sa simplicité de fonctionnement réduit notablement la maintenance. Cela est d'autant plus vrai que l'éjecteur-condenseur est très maniable et peut être démonté sans le recours à des machines spécialisées. Dans le cas de stockage souterrain, il reste en outre accessible en surface. Tout cela contribue à rendre l'installation très bon marché.

L'invention sera mieux comprise à la lecture de la description détaillée qui va suivre et à l'examen des dessins annexés qui représentent, à titre d'exemple non limitatif, un mode de réalisation du présent procédé ainsi qu'une forme de réalisation de la présente installation de recondensation. Sur ces dessins :
- la figure 1 est un schéma de principe d'un mode de réalisation du présent procédé qui montre l'essentiel d'une installation de recondensation selon la présente invention ainsi qu'une coupe d'une cavité de stockage de produit à tension de vapeur supérieure à 50 kilopascals à la température du stockage. On ne saurait que trop insister sur l'absence d'échelles réalistes dans cette figure. Dans la suite, on admettra qu'il s'agit de propane de type "commercial" bien que d'autres types de produits soient envisageables dans le cadre de la présente invention;
- la figure 2 est un diagramme dans le plan température-pression donnant la courbe d'ébullition du propane de type "commercial";
- la figure 3 est une coupe axiale d'un éjecteur-condenseur utile à la mise en oeuvre du présent procédé et entrant dans l'installation de recondensation selon la présente invention;
- la figure 4 est un schéma hydraulique en vue isométrique d'une installation de recondensation selon la présente invention.

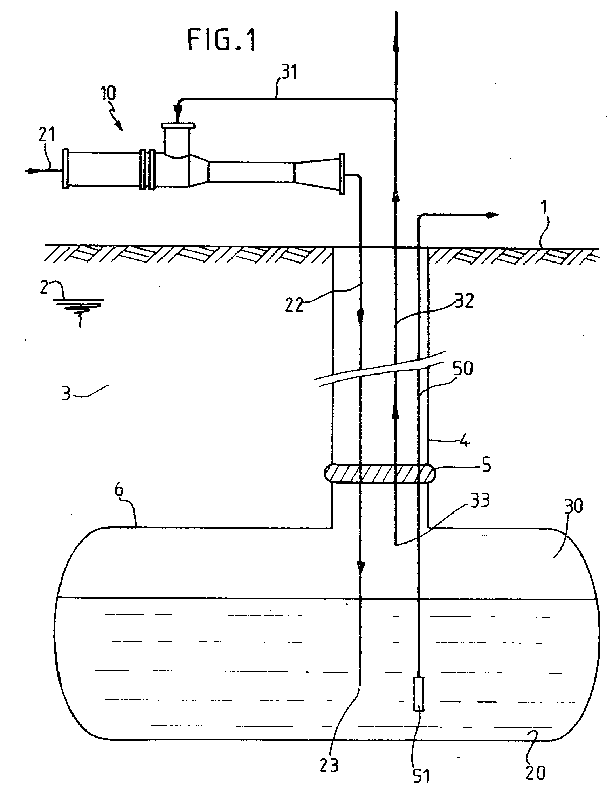

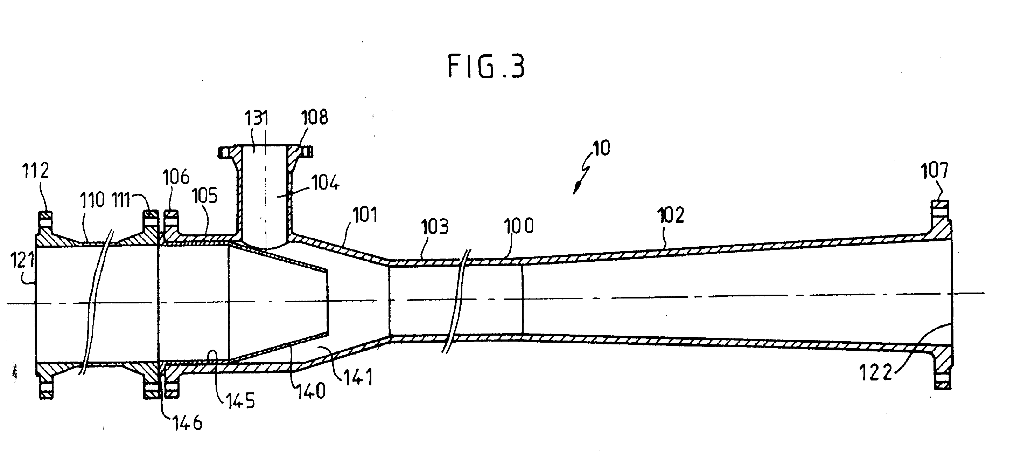

La figure 1 représente très schématiquement la coupe d'un massif 3 comportant une cavité 6 de stockage. Au moins un puits 4 d'exploitation relie la cavité 6 à la surface 1 du sol. Le puits 4 comporte au moins un élément 5 d'obturation qui empêche la cavité 6 de communiquer avec l'atmosphère. Cet élément 5 d'obturation est cependant traversé par au moins une conduite 22 d'introduction du produit à stocker ou de remplissage ainsi que par une conduite 32 d'évacuation de la vapeur de ce produit et par une conduite 50 de soutirage équipée d'une pompe 51 du produit liquide.

Le toit de la cavité 6 se trouve avantageusement aux alentours d'une centaine de mètres de la surface 2 de la nappe phréatique (dans le cas du propane). Ainsi, l'eau souterraine qui imprègne le massif 3 tout autour de la cavité 6 exerce-t-elle une pression hydrostatique de l'ordre de 10 bars à la profondeur du toit de la cavité. Cette pression assure dès lors l'étanchéité de la cavité dont le contenu fluide ne peut pas s'échapper dans les roches voisines. En même temps, elle garantit la mise en pression du propane au sein de la cavité au point que la majeure partie de l'hydrocarbure stocké est sous forme liquide. La phase liquide 20 s'accumule au fond de la cavité 6 tandis que la phase vapeur 30 occupe le volume disponible restant dans le ciel de cette cavité 6. En dehors de toute manoeuvre de remplissage ou de soutirage, la phase vapeur 30 est en équilibre avec la phase liquide si bien que le ciel de la cavité se trouve à une pression égale à la tension de vapeur saturante à la température correspondante. Cette dernière se situe généralement entre 15 et 20°C pour des stockages du type de celui pris ici en compte.

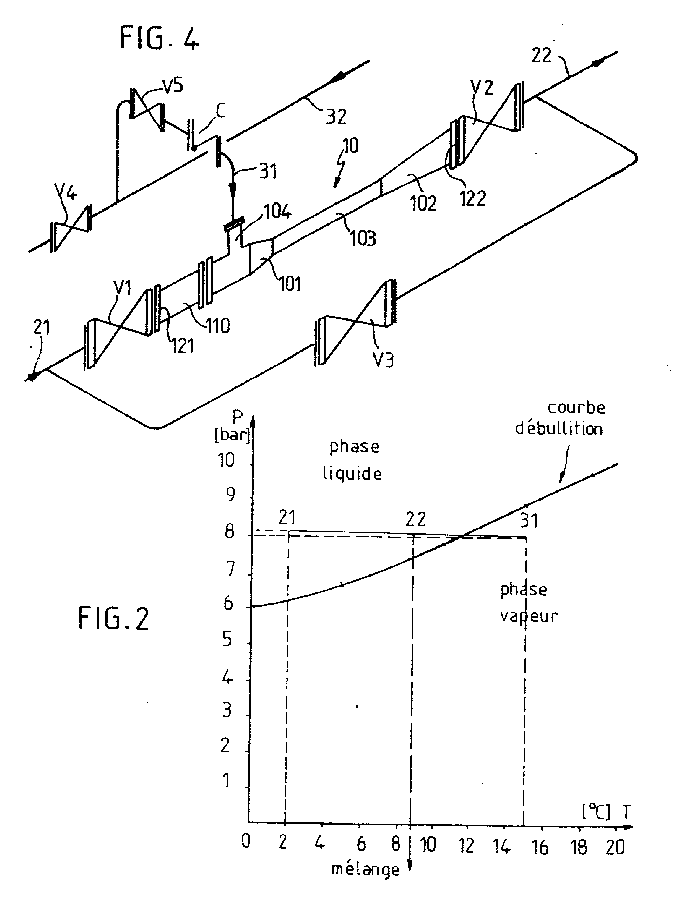

Lors du remplissage au contraire, du propane liquéfié est amené par la conduite 22 jusque dans la cavité 6, l'extrémité 23 de la conduite 22 de remplissage pouvant se trouver ou non en permanence dans la phase liquide 20 du contenu de la cavité 6. Le propane provient alors le plus souvent d'un bateau transporteur qui le conserve sous forme liquide à la pression amosphérique grâce au maintien d'une température très basse (-40°C environ). Puis, le propane est réchauffé tandis que sa pression est accrue. C'est ainsi qu'il arrive au niveau de l'installation de remplissage de la cavité par la conduite 21 d'amenée avec typiquement 2°C de température et 8,3 bars de pression dans le cas pris en exemple. Cet état est représenté en 21 sur le diagramme de la figure 2. Il correspond donc à un état liquide situé à gauche de la courbe d'ébullition du propane.

Comme cela a été exposé en commençant, l'introduction d'une certaine quantité de propane liquéfié au sein de la cavité 6 provoque l'élévation du niveau de la phase liquide 20. La phase vapeur 30 voit donc diminuer la place qui lui est offerte, sa pression augmente et sa température également du fait de cette compression. Si d'autres quantités de propane liquéfié ne sont pas introduites immédiatement après, une partie de la phase vapeur 30 peut alors se liquéfier par abaissement de sa température. En effet, du temps est dans ce cas accordé pour des échanges thermiques entre le contenu de la cavité 6 et le massif encaissant 3 si bien que la température du propane est à même de se stabiliser. Avec la liquéfaction de la phase vapeur 30, l'accroissement de sa pression disparaît en substance si bien qu'aucune mesure supplémentaire ne s'impose. A titre indicatif, ce mécanisme allant dans le sens de la sécurité intervient pour une installation particulière déjà réalisée jusqu'à des débits de remplissage de l'ordre de 500 m³/h.

Avec des débits plus élevés et en particulier avec ceux de l'ordre de 2 000 m³/h ou plus qui sont recherchés pour des questions de rentabilité, les échanges thermiques nécessaires à la liquéfaction d'une partie de la vapeur comprimée n'ont pas le temps de se produire. La phase vapeur 30 connaît donc une pression qui ne cesse de s'accroître à mesure que du propane liquéfié est introduit dans la cavité. Et elle menace d'atteindre finalement la limite supérieure des pressions autorisées dans cette cavité. Pour mémoire, cette pression maximale admissible est essentiellement fixée en fonction de l'étanchéité des parois de la cavité 6 et du puits 4 ainsi que de l'élément 5 d'obturation. Son dépassement risquerait par conséquent d'entraîner une fuite du produit. En réalité, avant qu'il n'arrive un tel désastre, la phase vapeur 30 serait en partie purgée à l'atmosphère ou à la torche par la conduite d'évacuation 32 et des vannes de sécurité se déclencheraient. Mais l'on conçoit que ces interventions doivent demeurer exceptionnelles.

Dans ce but, il est connu de reliquéfier tout ou partie de la vapeur évacuée hors de la cavité et de réintroduire le condensat au sein de la cavité. De façon caractéristique de la présente invention, ces deux opérations sont effectuées à l'aide d'un éjecteur-condenseur 10. La figure 1 montre cet appareil en vue de côté tandis que la figure 3 en présente une coupe axiale. Il s'agit en effet d'un ensemble tubulaire de diamètre intérieur de l'ordre de quelques dizaines de centimètres et comprenant trois éléments assemblables.

Parmi ces derniers, l'élément principal n'est autre qu'un convergent-divergent 100. En partant de la droite de la figure 3, c'est-à-dire en allant à contre-courant, on trouve, pour une application typique donnée à titre d'exemple:
* une bride 107 percée à intervalles réguliers de trous cylindriques de même axe que l'éjecteur-condenseur 10. Ceux-ci peuvent par exemple recevoir des boulons en vue de raccorder l'extrémité 122 correspondante de l'éjecteur-condenseur à la conduite 22 de remplissage de la cavité 6;
* le tronçon divergent 102 de l'éjecteur-condenseur 10. Par exemple, son diamètre intérieur double à peu près sur une longueur axiale de l'ordre du mètre;
* un tronçon droit 103 central qui garde par exemple le plus petit diamètre intérieur sur quelques mètres;
* le tronçon convergent 101 de l'éjecteur-condenseur 10. Ce dernier est beaucoup plus court que le tronçon divergent 102. A titre d'exemple, il peut permettre de repasser du diamètre intérieur minimal au diamètre intérieur maximal du tronçon 102 sur une longueur axiale de quelques dizaines de centimètres seulement;
* un tronçon droit 105 d'entrée. Du côté où ce tronçon 105 se rattache au convergent 101, il comporte un tube latéral 104 d'axe perpendiculaire à l'axe de l'éjecteur-condenseur 10. Le tube latéral 104 présente avantageusement une bride 108 de raccordement comparable à la bride 107 évoquée plus haut. Toutefois, elle a cette fois pour fonction de faciliter la connexion du tube latéral 104 avec la conduite 32 d'évacuation de la vapeur, ou plutôt une dérivation 31 de cette dernière;
* une bride 106 également comparable à la bride 107.

Cette dernière bride 106 sert à la vérité à raccorder le convergent-divergent 100 à un raccord 110 droit destiné à être placé à l'entrée de l'éjecteur-condenseur 10. Le raccord 110 comporte en effet également une bride 111 de taille et de forme identiques à celles de la bride 106. Ainsi un rebord 146 porté par une buse 140 intérieure peut-il être coincé entre les deux brides et maintenu par elles. De la sorte, la buse 140 se trouve-t-elle assujettie à l'intérieur du convergent-divergent 100.

Avec un tronçon amont droit 145, la buse épouse tout d'abord le tronçon droit 105 d'entrée de l'élément principal. Puis, la buse 140 se resserre en tronc de cône. Dans le cadre de l'exemple de dimensionnement suggéré jusqu'ici, elle peut se terminer en un diamètre intérieur un peu plus faible que le plus petit diamètre du convergent 101, et cela à quelques dizaines de centimètres de la fin de son tronçon droit 145. C'est ainsi qu'une chambre 141 annulaire se trouve définie entre le convergent 101 du convergent-divergent 100 et la paroi extérieure de la buse 140. Elle est disposée de sorte que le tube latéral 104 y débouche. Dans l'exemple de la figure 3, cela est obtenu en maintenant l'extrémité resserrée de la buse 140 à une vingtaine de centimètres du passage du convergent 101 au tronçon droit 103 central.

Enfin, le raccord 110 peut comporter lui aussi à son extrémité libre 121 tout à fait à gauche sur la figure 3 une bride 112 comparable à la bride 107. Cette dernière bride 112 sert alors avantageusement à connecter l'éjecteur-condenseur 10 à la conduite 21 d'amenée du propane liquéfié.

L'éjecteur-condenseur décrit ci-avant et objet de la figure 3 présente la particularité de pouvoir être démonté entre les brides 111 et 106 de manière à changer la buse 140 pour une buse de dimensions différentes, en vue de satisfaire de nouvelles conditions d'exploitation par exemple. Dans un dessin différent, la buse peut être fixe. Dans ce cas, elle peut n'être constituée que d'une partie conique raccordée par pincement ou soudure sur son grand diamètre à l'intérieur du tronçon droit d'entrée 105 de l'élément principal. Dès lors, l'élément de raccord 110 n'a pas lieu d'être.

La structure de l'éjecteur-condenseur 10 qui vient d'être décrit, est bien connue. En particulier, dans l'industrie chimique, un tel ensemble est utilisé pour évacuer un gaz. Dans ce cas, on fait circuler un fluide sous pression dans l'élément principal 100 depuis son entrée 121 jusqu'à sa sortie 122. Lorsque ce fluide passe dans la partie rétrécie de la buse 140 et débouche dans le convergent 101, la chambre 141 annulaire est le lieu d'une dépression. Cela permet d'aspirer le gaz à évacuer via le tube latéral 104. Il est alors mélangé à l'écoulement principal de fluide moteur pour ressortir avec lui de l'éjecteur-condenseur par sa sortie 122. En outre, si le fluide moteur est un liquide et si les conditions de pression et de température s'y prêtent, le gaz évacué peut se condenser au passage de la chambre 141 annulaire.

C'est ce qui se passe dans le cas de l'installation de recondensation schématisée sur la figure 1. Dans le cadre des dimensions données ci-dessus pour l'éjecteur-condenseur 10 par exemple, un débit de 2 700 m³/h de propane commercial liquéfié amené par la conduite 21 à une température de 2°C et une pression de 8,3 bars permet d'entraîner, de condenser et de réinjecter un débit de 1 400 m³/h de vapeur évacuée par la conduite 31 à une température de 15°C et une pression de 8 bars. L'état correspondant à celui de la vapeur évacuée est représenté en 31 sur la figure 2. Il se trouve bien entendu à droite de la courbe d'ébullition du propane utilisé dans ce cas. Le mélange qui est finalement réinjecté en sortie de l'éjecteur-condenseur 10 par la conduite 22 de remplissage, correspond à un état 22 situé sur cette même figure 2. L'état 22 se trouve donc à gauche de la courbe d'ébullition, le mélange étant entièrement liquide. Cela assure bien entendu l'efficacité de la méthode, la vapeur évacuée n'étant même pas en partie réintroduite dans la cavité. En même temps, on évite aussi les inconvénients liés aux écoulements diphasiques. Il est toutefois intéressant que le tube latéral 104 soit disposé verticalement afin d'éviter, quoi qu'il arrive, tout problème lié à la gravité.

La figure 4 précise quelque peu comment une installation de recondensation pourrait intégrer l'éjecteur-condenseur 10 selon la présente invention. Il est utile tout d'abord que des vannes V1 et V2 soient prévues à l'entrée 121 et à la sortie 122 de l'éjecteur-condenseur 10. Ainsi, ce dernier peut-il être démonté et cela d'autant plus facilement que sa longueur totale est de l'ordre de quelques mètres. Cette possibilité est particulièrement intéressante en relation avec la buse 140 qui peut ainsi être échangée à la demande. De la sorte, on adapte sa forme à la dépression nécessaire pour non seulement entraîner la vapeur évacuée de la cavité 6, mais aussi la condenser et produire un mélange liquide.

Du point de vue de la sécurité, il est également possible de prévoir sur la conduite 21 d'amenée du propane liquéfié un by-pass relié à la conduite 22 de remplissage de la cavité 6 par une simple vanne V3. Pour la même raison, il est préférable que la conduite 32 d'évacuation de la vapeur puisse déboucher dans un réservoir tampon (non représenté), à l'air libre ou dans un réseau de torches. Ainsi, au cas où l'éjecteur-condenseur 10 ne pourrait pas remplir convenablement son office, pourrait-on tout de même libérer la vapeur en trop et éviter les surpressions indésirables au sein de la cavité.

Toutefois, en fonctionnement normal de l'installation de recondensation, la vanne V4 disposée sur la conduite 32 reste fermée et la vapeur est délivrée par la conduite 31 vers le tube latéral 104 de l'éjecteur-condenseur 10. Cette dérivation 31, outre une vanne V5, comporte avantageusement un clapet C de non-retour. On peut également concevoir qu'un système de régulation (non représenté) contrôle l'ouverture des vannes de sorte que seulement une partie du produit liquide amené passe dans l'éjecteur-condenseur 10 et/ou que seulement une partie de la vapeur évacuée soit dérivée vers l'éjecteur-condenseur 10. Le système de régulation peut encore être adapté de sorte que le débit de vapeur aspiré par le tube latéral 104 soit automatiquement asservi aux conditions de pression ou de débit du produit liquide amené ou de la vapeur évacuée.

Cette installation de recondensation est avantageusement disposée dans un rayon de 50 m environ autour du puits 4 d'exploitation. Ainsi, les pertes de charge dans les conduites sont-elles mieux gérées. Au total, on perd un peu en pression sur le produit liquide introduit en cavité. Cela représente toutefois une perte d'énergie négligeable par rapport à l'énergie qui aurait été consommée par un ensemble compresseur et condenseur pour produire selon la méthode classique le même effet.

Une autre application de l'installation de recondensation qui vient d'être décrite, est l'évacuation de la vapeur créée dans un stockage souterrain de gaz réfrigéré, stockage cryogénique en phase liquide (éthylène par exemple à -104°C environ ou gaz naturel liquéfié -GNL- à -163°C environ), par suite du réchauffement imposé par la roche environnante. On pourrait alors profiter des manoeuvres de renouvellement du stock de gaz pour recycler une certaine quantité de vapeur et abaisser ainsi la pression dans le stockage. Un dimensionnement approprié de l'éjecteur-condenseur en fonction des débits et des états de pression-température des produits amenés et évacués devra pour cela être préalablement trouvé.

## Revendications

1. Installation de recondensation d'un stockage de dimensions importantes pour produit à tension de vapeur supérieure à 50 kilopascals à la température du stockage, maintenant en deçà d'une limite prédéterminée la pression au sein dudit stockage pendant son remplissage, ledit stockage contenant une phase liquide (20) dudit produit surmontée par une phase vapeur (30) dudit produit, ladite installation comprenant au moins :
- un éjecteur-condenseur (10) se composant d'une tubulure avec un tube latéral (104) d'axe de préférence vertical,
- une conduite de remplissage (22) adaptée à faire communiquer au moins ladite tubulure avec ledit stockage,
- une conduite d'évacuation (32) adaptée à faire communiquer ladite phase vapeur (30) dudit stockage avec ledit tube latéral (104), et
- une conduite d'amenée (21) adaptée à amener au moins une partie dudit produit liquide dans ladite tubulure, caractérisée en ce que
ladite tubulure dudit éjecteur-condenseur (10) comprend au moins :
- un élément principal (100) de section variable se composant, de l'amont à l'aval, d'un convergent (101), d'un tronçon droit (103) central et d'un tronçon divergent (102), et
- une buse (140) de section également variable ayant un tronçon resserré en tronc de cône,
ladite buse (140) étant assujettie au sein dudit élément principal (100) en amont du convergent (101), ledit tronçon resserré de ladite buse (140) pénètre partiellement dans ledit convergent (101) de façon à définir entre eux une chambre annulaire (141) dans laquelle débouche ledit tube latéral (104).

2. Installation de recondensation selon la revendication 1, caractérisée en ce que ledit produit liquide est amené avec un débit compris entre 500 et 3 000 m³/h et en ce que ladite tubulure dudit éjecteur-condenseur (10) mesure entre 1 et 10 m de long contre un diamètre intérieur variant de 100 à 5 cm.

3. Installation de recondensation selon la revendication 1 ou la revendication 2, dans lequel ledit élément principal (100) comprend en amont du convergent (101) un tronçon droit d'entrée (105), ladite buse (140) comprend en amont dudit tronçon resserré en tronc de cône un tronçon droit d'entrée (145) épousant celui de l'élément principal (100), ladite tubulure dudit éjecteur-condenseur (10) comportant en outre un raccord (110) adapté à être monté en amont dudit élément principal (100), l'extrémité libre dudit tronçon droit d'entrée (145) de ladite buse (140) comportant par ailleurs un rebord (146) adapté à être coincé entre ledit raccord (110) et ledit élément principal (100) afin d'assujettir ladite buse (140).

4. Installation de recondensation selon l'une quelconque des revendications 1 à 3, caractérisée en ce que ladite tubulure dudit éjecteur-condenseur (10) est munie à ses deux extrémités (121, 122) de brides (112, 107) de raccordement.

5. Installation de recondensation selon l'une quelconque des revendications 1 à 4, caractérisée en ce qu'une vanne (V1, V2) est montée à chacune des deux extrémités (121, 122) de ladite tubulure dudit éjecteur-condenseur (10) tandis qu'un by-pass muni d'une vanne (V3) relie directement ladite conduite d'amenée (21) à ladite conduite de remplissage (22) et en ce qu'une dérivation (31) relie ladite conduite d'évacuation (32) audit tube latéral (104), ladite dérivation (31) étant munie d'une vanne (V5) et d'un clapet (C) de non-retour tandis que ladite conduite d'évacuation (32) comporte une vanne (V4) en aval de ladite dérivation (31).

6. Installation de recondensation selon la revendication 5, caractérisée en ce qu'un système de régulation contrôle une ou plusieurs des vannes (V1, V2, V3, V4, V5) de sorte que seulement une partie dudit produit liquide amené par ladite conduite d'amenée (21) passe dans ladite tubulure dudit éjecteur-condenseur (10) et/ou seulement une partie de ladite vapeur évacuée par ladite conduite d'évacuation (32) est dérivée vers ledit tube latéral (104) dudit éjecteur-condenseur (10) avec asservissement éventuel du débit.

7. Installation de recondensation selon l'une quelconque des revendications 1 à 6, ledit stockage comportant au moins une cavité souterraine (6) communiquant avec la surface par au moins un puits (4) d'exploitation obturé par des moyens (5) d'obturation, ladite limite prédéterminée étant la pression maximale admissible pouvant régner au sein de ladite cavité (6) sans occasionner de défauts d'étanchéité de ladite cavité (6), dudit puits (4) ou desdits moyens (5) d'obturation, caractérisée en ce que ledit éjecteur-condenseur (10) est disposé en surface (1) dans un rayon d'environ 50 m ou plus autour dudit puits (4) d'exploitation tandis que lesdites conduites de remplissage (22) et d'évacuation (32) passent dans ledit puits (4) au travers desdits moyens (5) d'obturation.

8. Installation de recondensation selon la revendication 7, caractérisée en ce que ladite cavité (6) est soumise à la pression de l'eau souterraine environnante, la pression y régnant restant inférieure à la pression hydrostatique tandis que sa température se trouve aux alentours de la température géothermique.

9. Installation de recondensation selon l'une quelconque des revendications 1 à 8, dans laquelle le produit stocké est soit un hydrocarbure pur ou en mélange, saturé ou non, liquéfié sous pression et/ou par la température soit tout autre gaz pur ou en mélange liquéfié de même manière (par la pression et/ou la température).

## Patentansprüche

1. Anlage zur Rückkondensierung einer Lagerung großer Abmessungen für ein Produkt mit einer Dampfspannung von mehr als 50 Kilopascal bei der Temperatur der Lagerung, die den Druck innerhalb der Lagerung während ihres Einfüllens diesseits einer vorbestimmten Grenze hält, wobei diese Lagerung eine flüssige Phase (20) des Produkts überlagert von einer Dampfphase (30) dieses Produkts enthält, wobei diese Anlage mindestens aufweist:
- einen Ejektor-Kondensierer (10), der aus einem Rohrstutzen mit einem seitlichen Rohr (104) mit vorzugsweise senkrechter Achse besteht,
- eine Einfülleitung (22), die zumindest den Rohrstutzen mit der Lagerung in Verbindung setzt,
- eine Auslaßleitung (32), die die Dampfphase (30) der Lagerung mit dem seitlichen Rohr (104) in Verbindung setzt, und
- eine Zufuhrleitung (21), die mindestens einen Teil des flüssigen Produkts in den Rohrstutzen bringt,
dadurch gekennzeichnet, daß
der Rohrstutzen des Ejektor-Kondensierers (10) mindestens aufweist:
- ein Hauptelement (100) variablen Querschnitts, das von vorne nach hinten aus einem Mischrohrkopf (101), einem geraden zentralen Abschnitt (103) und einem sich erweiternden Abschnitt (102) besteht, und
- eine Düse (140) ebenfalls variablen Querschnitts, die einen kegelstumpfförmig verengten Abschnitt besitzt,
wobei die Düse (140) innerhalb des Hauptelements (100) vor dem Mischrohrkopf (101) befestigt ist, wobei der verengte Abschnitt der Düse (140) teilweise in den Mischrohrkopf (101) eindringt, um mit ihm eine ringförmige Kammer (141) zu definieren, in die das seitliche Rohr (104) mündet.

2. Rückkondensieranlage nach Anspruch 1, dadurch gekennzeichnet, daß das flüssige Produkt mit einem Durchsatz zugeführt wird, der zwischen 500 und 3000 m³/h liegt und daß der Rohrstutzen des Ejektor-Kondensierers (10) zwischen 1 und 10 m lang ist bei einem Innendurchmesser, der zwischen 100 und 5 cm variiert.

3. Rückkondensieranlage nach Anspruch 1 oder Anspruch 2, bei der das Hauptelement (100) vor dem Mischrohrkopf (101) einen geraden Eingangsabschnitt (105) aufweist, die Düse (140) vor dem kegelstumpfförmig verengten Abschnitt einen geraden Eingangsabschnitt (145) besitzt, der sich an den des Hauptelements (100) anpaßt, wobei der Rohrstutzen des Ejektor-Kondensierers (10) außerdem einen Anschluß (110) aufweist, der vor dem Hauptelement (100) montiert werden kann, wobei das freie Ende des geraden Eingangsabschnitts (145) der Düse (140) außerdem einen Rand (146) aufweist, der zwischen den Anschluß (110) und das Hauptelement (100) geklemmt werden kann, um die Düse (140) zu befestigen.

4. Rückkondensieranlage nach einem beliebigen der Ansprüche 1 bis 3, dadurch gekennzeichnet, daß der Rohrstutzen des Ejektor-Kondensierers (10) an seinen beiden Enden (121, 122) mit Anschlußzwingen (112, 107) versehen ist.

5. Rückkondensieranlage nach einem beliebigen der Ansprüche 1 bis 4, dadurch gekennzeichnet, daß an jedem der beiden Enden (121, 122) des Rohrstutzens des Ejektor-Kondensierers (10) ein Ventil (V1, V2) angeordnet ist, während ein Bypass mit einem Ventil (V3) direkt die Zufuhrleitung (21) mit der Einfülleitung (22) verbindet, und daß eine Abzweigung (31) die Auslaßleitung (32) mit dem seitlichen Rohr (104) verbindet, wobei die Abzweigung (31) mit einem Ventil (V5) und einer Rückschlagklappe (C) versehen ist, während die Auslaßleitung (32) ein Ventil (V4) hinter der Abzweigung (31) aufweist.

6. Rückkondensieranlage nach Anspruch 5, dadurch gekennzeichnet, daß ein Einstellsystem ein Ventil oder mehrere der Ventile (V1, V2, V3, V4, V5) steuert, so daß nur ein Teil des von der Zufuhrleitung (21) zugeführten flüssigen Produkts in den Rohrstutzen des Ejektor-Kondensierers (10) übergeht und/oder nur ein Teil des durch die Auslaßleitung (32) abgeführten Dampfs zum seitlichen Rohr (104) des Ejektor-Kondensierers (10) abgeleitet wird, mit eventueller Regelung des Durchsatzes.

7. Rückkondensieranlage nach einem beliebigen der Ansprüche 1 bis 6, bei der die Lagerung mindestens einen unterirdischen Hohlraum (6) aufweist, der mit der Oberfläche über mindestens einen Betriebsschacht (4) in Verbindung steht, der durch Verschlußmittel (5) verschlossen wird, wobei die vorbestimmte Grenze der maximal zulässige Druck ist, der innerhalb des Hohlraums (6) herrschen kann, ohne Dichtungsfehler des Hohlraums (6), des Schachts (4) oder der Verschlußmittel (5) hervorzurufen, dadurch gekennzeichnet, daß der Ejektor-Kondensierer (10) an der Oberfläche (1) in einem Umkreis von etwa 50 m oder mehr um den Betriebsschacht (4) angeordnet ist, während die Einfüll- (22) und Auslaßleitungen (32) durch die Verschlußmittel (5) hindurch in den Schacht (4) verlaufen.

8. Rückkondensieranlage nach Anspruch 7, dadurch gekennzeichnet, daß der Hohlraum (6) dem Druck des umgebenden unterirdischen Wassers unterworfen ist, wobei der hier herrschende Druck unter dem hydrostatischen Druck bleibt, während seine Temperatur sich in etwa in Höhe der geothermischen Temperatur befindet.

9. Rückkondensieranlage nach einem beliebigen der Ansprüche 1 bis 8, in der das gelagerte Produkt entweder ein reiner oder gemischter, gesättigter oder nicht gesättigter, unter Druck und/oder durch die Temperatur verflüssigter Kohlenwasserstoff oder jedes andere reine oder gemischte Gas ist, das in gleicher Weise verflüssigt wird (durch Druck und/oder Temperatur).

## Claims

1. A recondensation installation for a storage facility of great dimension for storing a product having a vapor pressure that is greater than 50 kPa at the storage temperature, ensuring that the pressure inside said storage facility during filling is maintained below a predetermined limit, said storage facility containing a liquide phase (20) of said product surmounted by a vapor phase (30) of said product, said installation comprising at least:
a jet compressor-condenser (10) consisting of a tubing having a side tube (104) which preferably has a vertical axis;
a filling duct (22) suitable for causing at least said tubing to communicate with said storage facility;
an exhaust duct (32) suitable for causing said vapor phase in said facility to communicate with said side tube (104); and
a feed duct (21) suitable for feeding at least a portion of said liquid product in said tubing, characterized in that said tubing of said jet compressor-condenser (10) comprising at least:
a main part (100) of varying section consisting of, from its upstream end to its downstream end, a convergent length (101), a constant-section central length (103), and a divergent length (102); and
a nozzle (140) of varying section having a frustoconical tapering length;
said nozzle (140) being held inside said main part (100) upstream from the convergent length (101), said frustoconical tapering length of said nozzle (140) partially penetrates said convergent length (101) so as to define thereby an annular chamber (141) therebetween into which said side tube (104) opens out.

2. A recondensation installation according to claim 1, characterized in that said liquid product is fed at a flow rate lying in the range 500 m³/h to 3,000 m³/h, and in that said tubing of said jet compressor-condenser (10) has a length lying in the range 1 m to 10 m, and an inside diameter lying in the range 100 cm to 5 cm.

3. A recondensation installation according to claim 1 or 2, characterized in that the main part (100) comprises, upstream from the convergent length (101), a constant-section inlet length (105), said nozzle (140) comprises, upstream from said frustoconical tapering length, a constant-section inlet length (145) conforming the constant-section inlet length (105) of the main part (100), said tubing of said jet compressor-condenser (10) further includes a coupling (110) suitable for being mounted upstream from said main part (100), the free end of said constant-section inlet length (145) of said nozzle (140) further including a rim (146) suitable for being clamped between said coupling (110) and said main part (100), thereby holding said nozzle (140) in place.

4. A recondensation installation according to any one of claims 1 to 3, characterized in that each of the two ends (121, 122) of said tubing of said jet compressor-condenser (10) is provided with a coupling flange (112, 107).

5. A recondensation installation according to any one of claims 1 to 4, characterized in that a control valve (V1, V2) is mounted at each of the two ends (121, 122) of said tubing of said jet compressor-condenser (10), whereas a bypass fitted with a control valve (V3) provides a direct connection between said feed duct (21) and said filling duct (22), and in that a branch (31) connects said exhaust duct (32) to said side tube (104), said branch (31) being provided with a control valve (V5) and with a non-return valve (C), whereas said exhaust duct (32) includes a control valve (V4) downstream from said branch (31).

6. A recondensation installation according to claim 5, characterized in that a regulation system controls one or more of the control valves (V1, V2, V3, V4, V5) so that only a portion of said liduid product fed by said feed duct (21) passes through said tubing of said jet compressor-condenser (10) and/or only a portion of said vapor removed via said exhaust duct (32) is passed to said side tube (104) of said jet compressor-condenser (10), at a flow rate which may optionally be servo-controlled.

7. A recondensation installation according to any one of claims 1 to 6, said storage facility including at least one underground cavity (6) communicating with the surface via at least one operating well (4) closed by closure means (5), said predetermined limit being the maximum admissible pressure that may be allowed to occur inside said cavity (6) without causing said fluid to leak from said cavity (6), from said well (4), or from said closure means (5), characterized in that said jet compressor-condenser (10) is disposed on the surface within a radius of about 50 meters or more around said operating well (4) whereas said filling (22) and exhaust ducts (32) pass within said well (4) and through said closure means (5).

8. A recondensation installation according to claim 7, characterized in that said cavity (6) is subjected to the pressure of surrounding underground water, the pressure inside the cavity remaining below the hydrostatic pressure while its temperature remains close to the geothermal temperature.

9. A recondensation installation according to any one of claims 1 to 8, wherein the stored fluid is either an optionally saturated pure hydrocarbon or hydrocarbon mixture, liquefied under pressure and/or by temperature, or else is any other pure gas or gas mixture that has been liquefied in the same manner (under pressure and/or by temperature).
